# FASCICULE DE BREVET EUROPEEN

(11) **EP 3 005 246 B1**
(45) Date de publication et mention de la délivrance du brevet: **02.05.2018**
(21) Numéro de dépôt: 14731752.3
(22) Date de dépôt: 28.05.2014
(51) Int. Cl.: G06K 19/077

(54) **SYSTÈME DE RADIO-IDENTIFICATION MODULAIRE AVEC MODULE RFID PASSIF ET MODULE RFID ACTIF**
MODULAR RFID SYSTEM WITH PASSIF RFID MODULE AND ACTIVE RFID MODULE
MODULARES RFID-SYSTEM MIT PASSIVEN RFID-MODUL UND ACTIVEN RFID-MODUL

(30) Priorité: 04.06.2013 FR 1355106
(43) Date de publication de la demande: 13.04.2016
(73) Titulaire: Editag, 13590 Meyreuil (FR)
(72) Inventeur: PITHOUD, Frédéric, F-13002 Marseille (FR); BACHELET, Yannick, F-13105 Mimet (FR); LOURIE, Boris, F-13290 LesMilles (FR)
(74) Mandataire: Chevalier, Renaud Philippe
(86) Numéro de dépôt international: PCT/FR2014/051268
(87) Numéro de publication internationale: WO 2014/195609

(56) Documents cités:
- EP-A1- 1 622 066
- EP-A1- 2 595 094
- CN-A- 101 996 335

## Description

La présente invention se rapporte à un système de radio-identification modulaire, et à un procédé d'assemblage d'un tel système de radio-identification modulaire.

L'invention se situe dans les domaines de l'identification, la localisation, la supervision et la surveillance d'objets ou de personnes à distance, au moyen des technologies de radio-identification dites RFID pour « Radio Frequency Identification ».

En technologie RFID, trois modules (autrement nommés marqueur, balise ou transpondeur) de radio-identification sont connues, à savoir le module RFID passif, le module RFID actif et le module RFID semi-passif.

Le module RFID passif, autrement appelé radio-étiquette, intègre simplement une mémoire, du type puce électronique, et une antenne reliée à la mémoire pour permettre la lecture à courte portée d'une donnée d'identification stockée dans la mémoire par un lecteur ; le lecteur étant constitué d'un émetteur radiofréquence qui active le module RFID passif en lui fournissant à courte distance l'énergie dont il a besoin pour communiquer sa donnée d'identification. Le module RFID passif permet ainsi la communication de la donnée d'identification à destination et à l'initiative d'une infrastructure extérieure, au moyen d'un lecteur à courte portée, typiquement jusqu'à une dizaine de mètre.

Le module RFID actif intègre un contrôleur muni d'une mémoire et relié à une batterie d'alimentation et également à un émetteur/récepteur radiofréquence. Un module RFID actif permet l'identification, la supervision et éventuellement l'enregistrement de données de mesure en provenance d'un ou plusieurs capteurs équipant le module. Ce module RFID actif permet ainsi la communication de données (donnée d'identification stockée dans la mémoire et éventuellement données de mesure issues du ou des capteurs) à destination d'une infrastructure extérieure et à l'initiative du contrôleur du module qui envoie ces données à intervalle de temps régulier, avec une longue portée, typiquement d'une centaine de mètre.

Le module RFID semi-passif, aussi appelés « BAP tag » pour « Battery-Assisted Passive tag » ou marqueur passif assisté par batterie, combine la technologie RFID active et la technologie RFID passive, en intégrant une mémoire reliée à une antenne et à une batterie. Ainsi, la batterie permet d'augmenter la portée de lecture de la donnée d'identification stockée dans la mémoire par un lecteur à moyenne portée, typiquement jusqu'à quelques dizaines de mètres ; la communication entre le module RFID semi-passif et l'infrastructure extérieure se faisant à l'initiative de l'infrastructure comme dans la technologie passive, et non pas à l'initiative du module, sur une longue portée, typiquement d'une centaine de mètre.

Les trois modules précités sont tous figés dans leurs technologies respectives, de sorte qu'il est nécessaire de recourir à deux modules distincts, à savoir un module RFID actif et un module RFID passif ou semi-passif, pour réaliser, d'un côté, une identification seule sur une longue période et, d'un autre côté, une identification, une supervision et un enregistrement sur une courte période.

En effet, il est parfois nécessaire de recourir à l'une ou l'autre des technologies RFID suivant les phases d'emploi des objets ou d'activité des personnes. A titre d'exemple, de nombreux objets dans différents domaines d'usage (eg. oeuvres d'art ou actifs industriels, objets de valeurs, échantillons et biens périssables) peuvent présenter des phases d'utilisation distinctes avec des besoins distincts :
- une phase de stockage sur une longue période (eg. sur plusieurs années) qui requiert uniquement de pouvoir identifier chaque objet au moyen de modules RFID passif voire semi-passif ;
- une phase de supervision sur de courtes périodes (eg. exposition temporaire des oeuvres d'art, usage d'actifs industriels pour la mise en oeuvre d'un procédé employé ponctuellement, transport) qui peut concerner certains des objets et qui requiert de pouvoir non seulement identifier, mais également superviser, surveiller avec des capteurs et localiser les objets en question au moyen de modules RFID actif.

La seule technologie RFID passive ou semi-passive n'est pas adaptée pour les phases de supervision car elle ne permet pas de remplir les besoins de supervision et d'enregistrement de données mesurées par des capteurs ; aucune supervision n'est possible avec les modules RFID passif et semi-passif du fait de l'initiative de la communication par l'infrastructure.

La seule technologie RFID active n'est quant à elle pas adaptée pour les phases de stockage car la gestion des batteries des multiples modules actifs est rédhibitoire en termes d'organisation et de coût ; ce problème se posant à moindre échelle avec les modules RFID semi-passif qui sont moins énergivore.

Il est donc classique de fixer sur les objets stockés des modules RFID passif qui ont l'avantage d'éviter une gestion des batteries pendant les longues phases de stockage et, pendant les courtes phases de supervision, de fixer temporairement sur les objets utilisés des modules RFID actif sans lien ni connexion avec les modules RFID passif.

Les inconvénients de procéder ainsi sont, premièrement, que la fixation de deux modules séparés sur un même objet pose des problèmes d'intrusion sur les objets, en particulier sur les objets fragiles et/ou de valeur comme les oeuvres d'art, et deuxièmement, la fixation d'un module RFID actif sur un objet est une opération chronophage et parfois complexe car on se fixe directement sur l'objet à surveiller.

En outre, il est nécessaire de doubler les opérations manuelles dites de rattachement ou « commissioning », avec un rattachement pour les modules RFID passif et un rattachement pour les modules RFID actif ; le rattachement consistant à rattacher ou associer un module à l'objet sur lequel il est fixé dans une base de données exploitée par l'infrastructure extérieure. Ce doublement des opérations de rattachement est bien entendu coûteux en temps de travail manuel, sans compter les risques d'erreur qui croissent avec le nombre d'opérations de rattachement.

De même, il est nécessaire de doubler les opérations manuelles dites de détachement ou « decommissioning » ; le détachement consistant à détacher ou désassocier un module à l'objet sur lequel il est fixé dans la base de données.

De plus, avec les risques d'erreur inhérents aux opérations de rattachement, il n'est pas certain que les données de mesure de capteur transmises par un module RFID actif sont bien associées à l'objet auquel est rattaché le module RFID actif en question dans la base de données.

Enfin, dans le cas où un module RFID actif doit se comporter différemment selon l'objet sur lequel il est fixé, il est nécessaire de procéder à une programmation manuelle et coûteuse en temps, soit au niveau de l'infrastructure extérieure, soit au niveau du module RFID actif lui-même, à chaque utilisation du module RFID actif sur l'objet.

L'état de la technique peut également être illustré par les enseignements de la demande de brevet EP 2 595 094 qui divulgue un système de radio-identification modulaire du type comprenant un premier module de radio-identification passif comprenant un boîtier à l'intérieur duquel est disposé une mémoire de stockage d'une donnée d'identification reliée à une première antenne, et un second module comportant une deuxième antenne.

L'état de la technique peut aussi être illustré par les enseignements de la demande de brevet EP 1 622 066 qui divulgue une étiquette de radio-identification comprenant des parties d'étiquette détachables, ainsi que par les enseignements de la demande de brevet CN101996335 qui divulgue un localisateur d'identification personnel basé sur une radio-identification à double fréquence, qui comprend un boîtier recevant intérieurement un module de radio-identification passif connecté à un premier processeur et un module de radio-identification actif connecté au premier processeur par l'intermédiaire d'un second processeur.

La présente invention a pour but de résoudre en tout ou partie les inconvénients précités, en proposant un système de radio-identification modulaire qui réduise les risques d'erreur de rattachement et de détachement, et qui offre à moindre coût une solution qui couvre toutes les phases d'utilisation du support à surveiller.

A cet effet, elle propose un système de radio-identification modulaire du type comprenant :
- un premier module de radio-identification passif comprenant un boîtier à l'intérieur duquel est disposé une mémoire de stockage d'une donnée d'identification reliée à une antenne ; et
- un second module de radio-identification actif comprenant un boîtier à l'intérieur duquel est disposé un contrôleur relié à une batterie d'alimentation, à un émetteur/récepteur radiofréquence et à au moins un capteur de mesure d'un paramètre physique ;
dans lequel les boîtiers des deux modules sont équipés de moyens de fixation réversible et complémentaire adaptés pour coopérer ensemble afin de permettre la fixation réversible du second module sur le premier module ;
et les modules comprennent des moyens de connexion électrique adaptés pour établir une connexion électrique entre la mémoire du premier module et le contrôleur du second module une fois que le second module est fixé sur le premier module.

Ainsi, l'invention propose un système modulaire permettant :
- la simple identification à courte distance du support (objet ou personne) au moyen du premier module RFID passif, ce premier module étant destiné à être fixé sur le support que l'on désire identifier en rattachant le premier module au support dans une base de données, pour satisfaire des besoins d'inventaire, de détection de présence à des points de lecture/écriture et/ou de sécurité antivol, le second module étant alors absent, autrement dit non accouplé au premier module ;
- l'identification à longue distance, la supervision, la localisation et la surveillance du support au moyen des premier et second modules accouplés, le second module permettant la mesure d'un ou plusieurs paramètres physiques de surveillance du support, et l'échange de données (donnée d'identification et données de mesure du ou des capteurs) à l'initiative du contrôleur du second module et sur une longue portée ; et
- éventuellement l'identification à moyenne distance du support si le premier module se voit équipé d'une batterie pour le convertir en module RFID semi-passif.

Grâce à l'invention, le second module ne comporte aucune donnée d'identification stockée par son contrôleur (hormis son numéro de série interne), et reste totalement générique. A l'accouplement entre les deux modules (accouplement mécanique et électrique), le second module est associé à la donnée d'identification du premier module, autrement dit le rattachement du second module avec le support s'effectue automatiquement à l'accouplement avec le premier module qui lui est porteur d'une donnée d'identification, permettant avantageusement de se passer d'une opération manuelle de rattachement du second module au support.

En outre, grâce à l'invention, le second module est fixé physiquement sur le premier module, et non pas directement sur le support, simplifiant ainsi l'opération d'ancrage sur le support, sans compter que ce second module est tout d'abord associé au premier module (et non pas au support) avant d'être ensuite associé au support (lors du rattachement dans la base de données) via le premier module préalablement identifié et rattaché au support dans la base de données.

De plus, une telle solution présente de nombreuses autres applications, comme par exemple :
- la possibilité de déclencher l'émission de signaux radio permettant de tracer des évènements de production/logisitique (notamment et à titre non limitatif des évènements du type demande de réapprovisionnement ou preuve de livraison) lors de la juxtaposition et/ou de la séparation des deux modules, de manière simple et en évitant toute transaction sur un système informatique ;
- la consultation via le premier module de données d'historique de juxtaposition ou de capteurs en provenance du second module.
Avantageusement, le système modulaire comprend en outre un capot de couverture du premier module, ledit capot comprenant des moyens de fixation réversible adaptés pour coopérer avec les moyens de fixation du boîtier dudit premier module, ledit capot recouvrant les moyens de connexion du premier module une fois que le capot est fixé sur le premier module.

Ainsi, lorsque le second module n'est pas utilisé, on protège le premier module et ses moyens de connexion au moyen du capot amovible, ce capot étant fixé de manière réversible sur le premier module grâce aux mêmes moyens de fixation que ceux employés pour la fixation du second module sur le premier module.

Dans une réalisation particulière, le capot intègre une batterie relié à des moyens de connexion électrique adaptés pour établir une connexion électrique avec les moyens de connexion du premier module une fois que le capot est fixé sur le premier module.

De cette manière, le capot équipé d'une batterie permet de convertir le premier module en un module RFID semi-passif, et ainsi accroître la portée de lecture.

De manière avantageuse, le premier module présente des moyens de fixation ménagés sur une portion de son boîtier qui ne vient pas en recouvrement complet de son antenne, de sorte que le second module ne recouvre pas complètement ladite antenne une fois que le second module est fixé sur le premier module.

Ainsi, le second module ne perturbe pas le rayonnement radio au niveau de l'antenne du premier module.

Selon une caractéristique, le boîtier du premier module présente une forme plate avec une épaisseur prédéterminée, et le boîtier du second module présente une encoche de réception du premier module ayant une profondeur équivalente à l'épaisseur du boîtier du premier module, où les moyens de fixation du second module sont ménagés dans ladite encoche.

Ainsi, le système complet (avec les deux modules accouplés) présente une épaisseur réduite sur le support, limitant ainsi l'encombrement.

Selon une autre caractéristique, les moyens de fixation sont des moyens de fixation par encliquetage, qui assurent un verrouillage mécanique entre les deux boîtiers.

Dans une mode de réalisation particulier, le premier module intègre une connexion électrique entre la mémoire et l'antenne, ladite connexion étant réalisée au moins en partie sur une face externe du boîtier du premier module et présentant une partie ruptible pourvue de moyens d'adhésion sur le support.

Ainsi, une fois que le premier module est fixé sur le support, ladite partie ruptible adhère au support. Si on procède au retrait du premier module, la partie ruptible reste adhérée sur le support et la connexion électrique entre la mémoire et l'antenne est rompue, rendant inopérant le premier module.

L'invention se rapporte également à un procédé d'assemblage d'un système de radio-identification modulaire conforme à l'invention, comprenant une phase de fixation du premier module sur un support, notamment un objet ou une personne, suivie d'une phase d'accouplement du second module sur le premier module avec :
- la fixation des boîtiers par coopération entre leurs moyens de fixation respectifs, et
- la connexion entre la mémoire du premier module et le contrôleur du second module par contact entre les moyens de connexion électrique.

Selon une possibilité de l'invention, suite à la phase d'accouplement, le contrôleur émet automatiquement un signal d'accouplement, pour informer ainsi une infrastructure extérieure de l'accouplement.

Selon une autre possibilité de l'invention, le procédé comprend en outre les phases de rattachement suivantes :
- une première phase de rattachement, entre la phase de fixation et la phase d'accouplement, dans laquelle on rattache le premier module au support dans une base de données exploitée par une infrastructure extérieure, avec une étape de lecture par l'infrastructure extérieure de la donnée d'identification stockée dans la mémoire du premier module ;
- une seconde phase de rattachement, après la phase d'accouplement, dans laquelle on rattache le second module au support dans la même base de données, avec le contrôleur du second module qui récupère la donnée d'identification stockée dans la mémoire du premier module et qui communique cette donnée d'identification à destination de l'infrastructure extérieure, de sorte que les premier et second modules sont associés à la même donnée d'identification et au même support dans la base de données.

Autrement dit, et comme expliqué ci-dessus, le rattachement du second module se fait automatiquement à l'accouplement entre les modules, avec une donnée d'identification commune aux deux modules pour l'infrastructure extérieure, fiabilisant et simplifiant ainsi le rattachement du second module au support.

Le procédé d'assemblage peut également comprendre successivement :
- une phase de désaccouplement du second module vis-à-vis du premier module, le premier module restant fixé sur le support, avec la séparation entre les boîtiers et la déconnexion entre la mémoire du premier module et le contrôleur du second module,
- une phase de détachement dans laquelle on détache le second module du support dans la base de données, avec le contrôleur du second module qui communique automatiquement une donnée de détachement à destination de l'infrastructure extérieure suite à la déconnexion dudit contrôleur avec la mémoire du premier module.

Ainsi, le détachement du second module se fait également de façon automatique, sans opération manuelle et sans risque d'erreur dans la base de données.

Il est également envisageable que, avant la phase d'accouplement, on stocke dans la mémoire du premier module des données relatives au support et/ou des paramètres de fonctionnement du second module, et ensuite, après la phase d'accouplement, le contrôleur lit automatiquement ces données relatives au support et/ou ces paramètres relatifs au second module via la connexion électrique entre les deux modules pour une supervision du support par le second module adaptée aux caractéristiques dudit support et dudit second module.

Ainsi, sans avoir à intervenir sur le second module ou sur l'infrastructure extérieure, le second module récupère dès l'accouplement avec le premier module les données relatives au support, pour une supervision en adéquation avec les caractéristiques du support. Par exemple, ces données relatives au support vont avoir une influence sur le contrôleur dans la gestion du ou des capteurs, la gestion d'éventuelles alertes, la gestion des communications par l'émetteur/récepteur radiofréquence, notamment sur la périodicité des envois à destination de l'infrastructure extérieure.

En outre, ce procédé d'assemblage peut se conclure par une phase de retrait du premier module vis-à-vis du support, ledit retrait rendant automatiquement ledit premier module inopérant, évitant ainsi à l'infrastructure extérieure de prendre en compte ce premier module qui n'est plus attaché à un support.

D'autres caractéristiques et avantages de la présente invention apparaîtront à la lecture de la description détaillée ci-après, d'un exemple de mise en oeuvre non limitatif, faite en référence aux figures annexées dans lesquelles :
- les figures 1 et 2 sont des vues schématiques d'un système conforme à l'invention, respectivement avant et après accouplement entre les deux modules ;
- la figure 3 est une vue schématique du premier module du système des figures 1 et 2, avec un capot de protection ;
- la figure 4 est une vue schématique d'une première utilisation du système conforme à l'invention, avec uniquement le premier module fixé sur un objet ; et
- la figure 5 est une vue schématique d'une seconde utilisation du système conforme à l'invention, avec les deux modules accouplés.

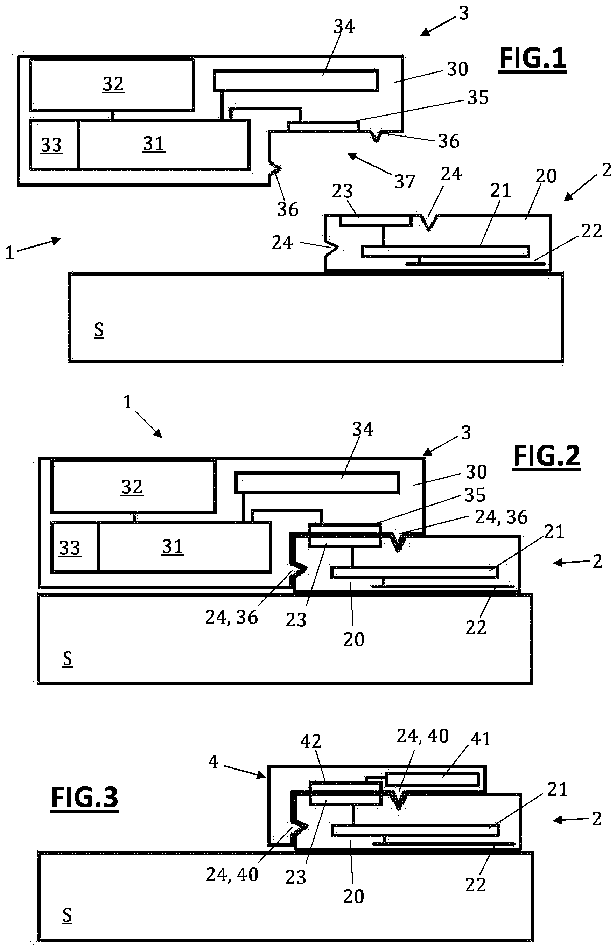

En référence aux figures 1 et 2, un système 1 de radio-identification modulaire conforme à l'invention comporte un premier module 2 de radio-identification passif et un second module 3 de radio-identification actif.

Le premier module 2 comporte un boîtier 20 à l'intérieur duquel sont disposées une mémoire 21 de stockage d'une donnée d'identification et autres paramètres propres au premier module 2, et une antenne 22 en liaison avec la mémoire 21. Le premier module 2 intègre également un connecteur électrique 23 disposé sur l'extérieur du boîtier 20 et en liaison avec la mémoire 21. Le boîtier 20 présente également des moyens de fixation 24 réversible (ou amovible), notamment du type moyen de fixation par encliquetage. Ces moyens de fixation 24 sont prévus sur une portion du boîtier 20, sans recouvrement de l'antenne 22. Le connecteur électrique 23 est prévu sur cette même portion du boîtier 20. Le boîtier 20 présente une forme plate avec une épaisseur prédéterminée, de préférence inférieure à 3 millimètres.

Le second module 3 comporte un boîtier 30 à l'intérieur duquel sont disposés un contrôleur 31 (notamment du type microcontrôleur), une batterie 32 d'alimentation électrique relié au contrôleur 31, un émetteur/récepteur radiofréquence 33 relié au contrôleur 31, et au moins un capteur 34 de mesure d'un paramètre physique (comme par exemple un accéléromètre, un capteur de température, un capteur d'humidité, un capteur de contact, un capteur de pression, etc.) relié au contrôleur 31. L'émetteur/récepteur radiofréquence 33 est notamment adapté à tout type d'infrastructure radio fixe ou mobile et, à titre d'exemple non limitatif, fonctionne selon des normes de communication UHF, GSM, Wifi, Bluetooth, 3G, Zigbee ou toutes autres normes de communication sans fil.

Le second module 3 intègre également un connecteur électrique 35 disposé sur l'extérieur du boîtier 30 et en liaison avec le contrôleur 31. Le boîtier 30 présente également une trappe (non illustrée) d'accès à la batterie 32 pour permettre son remplacement. Le boîtier 30 présente également des moyens de fixation 36 réversible qui sont complémentaires des moyens de fixation 24 du boîtier 20, afin de permettre la fixation réversible du boîtier 30 sur le boîtier 20 par coopération entre les moyens de fixation 24, 36, en particulier par coopération de forme et élasticité dans le cas de moyens de fixation par encliquetage. Le boîtier 30 présente une forme plate avec une épaisseur prédéterminée supérieure à celle du boîtier 20 et de préférence inférieure à 5 millimètres. Le boîtier 30 présente une encoche 37 de réception du boîtier 20, les moyens de fixation 36 étant prévus dans cette encoche 37, et cette encoche 37 présente une profondeur équivalente à l'épaisseur du boîtier 20. L'encoche 37 est suffisamment courte pour ne pas recouvrir complètement l'antenne 22, afin que le second module 3 ne recouvre complètement pas l'antenne 22 et permette la communication entre un lecteur L et le premier module 2.

En référence à la figure 3, le premier module 2 peut être recouvert par un capot 4 de protection, destiné principalement à la protection du connecteur électrique 23 en l'absence du second module 3. Ce capot 4 de couverture du premier module 2 comprend des moyens de fixation 40 réversible adaptés pour coopérer avec les moyens de fixation 24 du boîtier 20, de sorte que ce capot 4 est fixé sur le premier module 2 de la même manière que le second module 3. Comme visible sur la figure 3, ce capot 4 recouvre le connecteur électrique 23 une fois fixé sur le premier module 2.

De manière optionnelle, ce capot 4 intègre une batterie 41 relié à un connecteur électrique 42 adaptés pour établir une connexion électrique avec le connecteur électrique 23 du premier module 2 une fois que le capot 4 est fixé sur le premier module 2. Ainsi, la batterie 41 peut alimenter électriquement le premier module 2, de sorte que l'ensemble premier module 2/capot 4 forme un module RFID semi-passif.

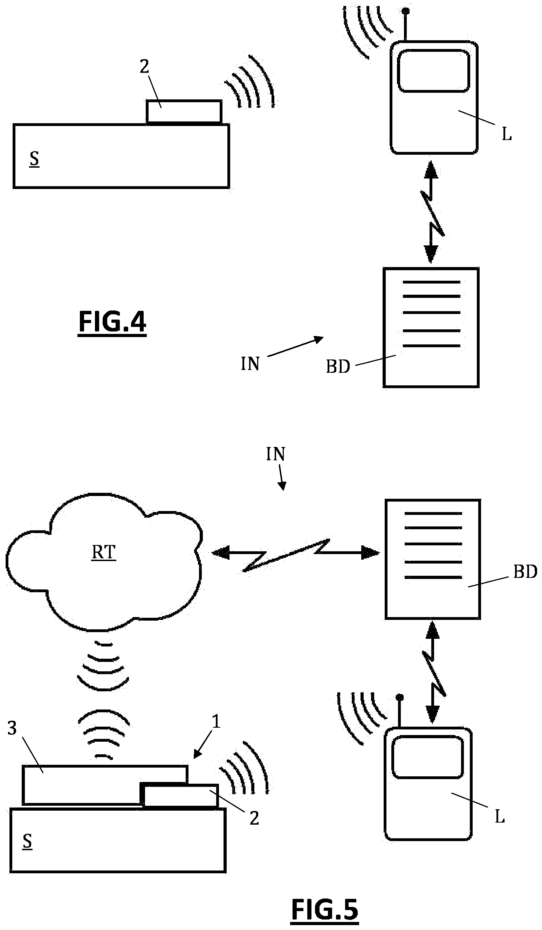

Dans une première utilisation illustrée schématiquement sur la figure 4, seul le premier module 2 est fixé sur le support S (objet ou personne). Dans cette utilisation, un lecteur fixe ou mobile L peut lire à courte ou moyenne portée la donnée d'identification stockée dans la mémoire 21, et ce même lecteur L peut communiquer la donnée d'identification à une base de données BD exploitée par une infrastructure IN extérieure. Ainsi, on peut mettre en oeuvre une première phase de rattachement, après la fixation du premier module 2 sur le support S, dans laquelle on rattache le premier module 3 au support S dans une base de données BD exploitée par l'infrastructure IN, après lecture par un lecteur L de la donnée d'identification stockée dans la mémoire 21 du premier module 2 et communication de cette donnée d'identification par le lecteur L à destination de l'infrastructure IN.

Dans une seconde utilisation illustrée schématiquement sur la figure 5, le second module 3 est accouplé au premier module 2, en procédant comme suit :
- on fixe le boîtier 30 sur le boîtier 20 par coopération entre leurs moyens de fixation 24, 36 respectifs, et de manière concomitante
- on connecte la mémoire 21 du premier module 2 et le contrôleur 31 du second module 3 par contact entre leurs connecteurs 23, 35.

Une fois les deux modules 2, 3 accouplés, le contrôleur 31 détecte ce couplage au niveau du connecteur 35 et, en retour, émet automatiquement un signal d'accouplement à destination de l'infrastructure IN.

En outre, une fois les deux modules 2, 3 accouplés, est mis en oeuvre une seconde phase de rattachement dans laquelle on rattache le second module 3 au support S dans la même base de données BD, avec le contrôleur 31 qui récupère la donnée d'identification stockée dans la mémoire 21 du premier module 2 et qui communique de sa propre initiative cette donnée d'identification à destination de l'infrastructure via un réseau de télécommunication RT grâce à son émetteur/récepteur 33. Ainsi, les deux modules 2, 3 sont associés automatiquement à la même donnée d'identification et au même support S dans la base de données BD.

Ainsi, le rattachement manuel ne se fait qu'une seule fois lors de la première phase de rattachement, à la fixation du premier module 2 sur le support S. Ensuite, seul un rattachement automatique est mis en oeuvre dans la seconde phase de rattachement, à l'accouplement du second module 3 sur le premier module 2 (« commissioning » automatique).

Pour prendre en compte des caractéristiques intrinsèques du support S dans le pilotage mis en oeuvre par le contrôleur 31, il est envisageable de prévoir :
- avant la phase d'accouplement, on stocke dans la mémoire 21 du premier module 2 des données relatives au support S (caractéristiques intrinsèques du support S), avec de préférence un stockage sécurisé pour éviter tout paramétrage mal intentionné ; et ensuite
- après la phase d'accouplement, le contrôleur 31 lit automatiquement ces données relatives au support S dans la mémoire 21 (de préférence après vérification de l'intégrité de ces données) pour pouvoir ainsi, de manière automatique et sans intervention sur le contrôleur 31 et sur l'infrastructure IN, établir une supervision du support S adaptée aux caractéristiques du support S.

Lorsque le besoin du second module 3 n'est plus présent, sont mise en oeuvre les étapes successives suivantes :
- on désaccouple le second module 3 vis-à-vis du premier module 2, le premier module 2 restant toujours fixé sur le support S, en procédant à la séparation entre les boîtiers 20, 30 qui entraîne la déconnexion entre les deux connecteurs 23, 35 ; puis
- on détache automatiquement le second module 3 du support S dans la base de données BD, avec le contrôleur 31 qui communique automatiquement une donnée de détachement à destination de l'infrastructure IN (suite à la déconnexion entre le contrôleur 31 la mémoire 21 du premier module 2), et l'infrastructure IN procède en réponse au détachement (« decommissioning » automatique).

Il est également à noter que si on procédé à un retrait physique du premier module 2 vis-à-vis du support S, ce retrait rend automatiquement le premier module 2 inopérant, en particulier avec un retrait qui provoquerait un arrachement ou une scission d'une connexion entre la mémoire 21 et l'antenne 22. Dans ce cas, la connexion entre la mémoire 21 et l'antenne 22 est réalisée au moins en partie sur une face externe du boîtier 20 (celle qui vient en contact avec le support S), et cette connexion présente une partie ruptible (qui se rompt au-delà d'un effort seuil donné) qui adhère au support S. Ainsi, lors du retrait du premier module 2, la partie ruptible se rompt en restant adhérée au support S, de sorte que la connexion est rompue entre la mémoire 21 et l'antenne 22.

Bien entendu l'exemple de mise en oeuvre évoqué ci-dessus ne présente aucun caractère limitatif et d'autres améliorations et détails peuvent être apportés au système selon l'invention, sans pour autant sortir du cadre de l'invention où d'autres formes de moyen de fixation peuvent par exemple être réalisées.

## Revendications

1. Système (1) de radio-identification modulaire du type comprenant :
- un premier module (2) de radio-identification passif comprenant un boîtier (20) à l'intérieur duquel est disposé une mémoire (21) de stockage d'une donnée d'identification reliée à une antenne (22) ; et
ledit système (1) étant **caractérisé en ce qu'**il comprend en outre :
- un second module (3) de radio-identification actif comprenant un boîtier (30) à l'intérieur duquel est disposé un contrôleur (31) relié à une batterie (32) d'alimentation, à un émetteur/récepteur (33) radiofréquence et à au moins un capteur (34) de mesure d'un paramètre physique ;
dans lequel les boîtiers (20, 30) des deux modules (2, 3) sont équipés de moyens de fixation (24, 36) réversible et complémentaire adaptés pour coopérer ensemble afin de permettre la fixation réversible du second module (3) sur le premier module (2) ;
et les modules (2, 3) comprennent des moyens de connexion (23, 35) électrique adaptés pour établir une connexion électrique entre la mémoire (21) du premier module (2) et le contrôleur (31) du second module (3) une fois que le second module (3) est fixé sur le premier module (2).

2. Système (1) selon la revendication 1, comprenant en outre un capot (4) de couverture du premier module (2), ledit capot (4) comprenant des moyens de fixation (40) réversible adaptés pour coopérer avec les moyens de fixation (24) du boîtier (20) dudit premier module (2), ledit capot (4) recouvrant les moyens de connexion (23) du premier module (2) une fois que le capot (4) est fixé sur le premier module (2).

3. Système (1) selon la revendication 2, dans lequel ledit capot (4) intègre une batterie (41) relié à des moyens de connexion (42) électrique adaptés pour établir une connexion électrique avec les moyens de connexion (23) du premier module (2) une fois que le capot est fixé sur le premier module (2).

4. Système (1) selon l'une quelconque des revendications précédentes, dans lequel le premier module (2) présente des moyens de fixation (24) ménagés sur une portion de son boîtier (20) qui ne vient pas en recouvrement complet de son antenne (22), de sorte que le second module (3) ne recouvre pas complètement ladite antenne (22) une fois que le second module (3) est fixé sur le premier module (2).

5. Système (1) selon l'une quelconque des revendications précédentes, dans lequel le boîtier (20) du premier module (2) présente une forme plate avec une épaisseur prédéterminée, et le boîtier (30) du second module (3) présente une encoche (37) de réception du premier module (2) ayant une profondeur équivalente à l'épaisseur du boîtier (20) du premier module (2), où les moyens de fixation (36) du second module (3) sont ménagés dans ladite encoche (37).

6. Système (1) selon l'une quelconque des revendications précédentes, dans lequel les moyens de fixation (24, 36) sont des moyens de fixation par encliquetage.

7. Système (1) selon l'une quelconque des revendications précédentes, dans lequel le premier module (2) intègre une connexion électrique entre la mémoire (21) et l'antenne (22), ladite connexion étant réalisée au moins en partie sur une face externe du boîtier (20) du premier module (2) et présentant une partie ruptible pourvue de moyens d'adhésion sur le support (S).

8. Procédé d'assemblage d'un système (1) conforme à l'une quelconque des revendications précédentes, comprenant une phase de fixation du premier module (2) sur un support (S), notamment un objet ou une personne, suivie d'une phase d'accouplement du second module (3) sur le premier module (2) avec :
- la fixation des boîtiers (20, 30) par coopération entre leurs moyens de fixation (24, 36) respectifs, et
- la connexion entre la mémoire (21) du premier module (2) et le contrôleur (31) du second module (3) par contact entre les moyens de connexion (23, 35) électrique.

9. Procédé d'assemblage selon la revendication 8, dans lequel, suite à la phase d'accouplement, le contrôleur (31) émet automatiquement un signal d'accouplement.

10. Procédé d'assemblage selon les revendications 8 ou 9, comprenant les phases de rattachement suivantes :
- une première phase de rattachement, entre la phase de fixation et la phase d'accouplement, dans laquelle on rattache le premier module (2) au support (S) dans une base de données (BD) exploitée par une infrastructure (IN) extérieure, avec une étape de lecture par l'infrastructure (IN) extérieure de la donnée d'identification stockée dans la mémoire (21) du premier module (2) ;
- une seconde phase de rattachement, après la phase d'accouplement, dans laquelle on rattache le second module (3) au support (S) dans la même base de données (BD), avec le contrôleur (31) du second module (3) qui récupère la donnée d'identification stockée dans la mémoire (21) du premier module (2) et qui communique cette donnée d'identification à destination de l'infrastructure (IN) extérieure, de sorte que les premier et second modules (2, 3) sont associés à la même donnée d'identification et au même support (S) dans la base de données (BD).

11. Procédé d'assemblage selon la revendication 10, comprenant successivement :
- une phase de désaccouplement du second module (3) vis-à-vis du premier module (2), le premier module (2) restant fixé sur le support (S), avec la séparation entre les boîtiers (20, 30) et la déconnexion entre la mémoire (21) du premier module (2) et le contrôleur (31) du second module (3),
- une phase de détachement dans laquelle on détache le second module (3) du support (S) dans la base de données (BD), avec le contrôleur (31) du second module (3) qui communique automatiquement une donnée de détachement à destination de l'infrastructure (IN) extérieure suite à la déconnexion dudit contrôleur (31) avec la mémoire (21) du premier module (2).

12. Procédé d'assemblage selon l'une quelconque des revendications 8 à 11, dans lequel, avant la phase d'accouplement, on stocke dans la mémoire (21) du premier module (2) des données relatives au support (S), et ensuite, après la phase d'accouplement, le contrôleur (31) lit automatiquement ces données relatives au support (S) via la connexion électrique entre les deux modules (2, 3) pour une supervision du support (S) par le second module (3) adaptée aux caractéristiques dudit support (S).

13. Procédé d'assemblage selon l'une quelconque des revendications 8 à 12, comprenant une phase de retrait du premier module (2) vis-à-vis du support (S), ledit retrait rendant automatiquement ledit premier module (2) inopérant.

## Patentansprüche

1. Modulares Funkidentifikationssystem (1) desjenigen Typs, der umfasst:
- ein erstes passives Funkidentifikationsmodul (2), das ein Gehäuse (20) umfasst, in dessen Inneren ein an eine Antenne (22) angeschlossener Speicher (21) zum Speichern einer Identifikationsinformation angeordnet ist; und
wobei das System (1) **dadurch gekennzeichnet ist, dass** es weiter umfasst:
- ein zweites aktives Funkidentifikationsmodul (3), das ein Gehäuse (30) umfasst, in dessen Inneren eine Steuerung (31) angeordnet ist, die an eine Versorgungsbatterie (32), an einen Funkfrequenz-Sender/Empfänger (33) und an mindestens einen Sensor (34) zum Messen eines physikalischen Parameters angeschlossen ist;
wobei die Gehäuse (20, 30) der zwei Module (2, 3) mit reversiblen und komplementären Befestigungsmitteln (24, 36) ausgestattet sind, die dafür ausgebildet sind, zusammenzuwirken, um das reversible Befestigen des zweiten Moduls (3) auf dem ersten Modul (2) zu ermöglichen;
und die Module (2, 3) elektrische Verbindungsmittel (23, 35) umfassen, die dafür ausgebildet sind, eine elektrische Verbindung zwischen dem Speicher (21) des ersten Moduls (2) und der Steuerung (31) des zweiten Moduls (3) herzustellen, sobald das zweite Module (3) auf dem ersten Modul (2) befestigt wird.

2. System (1) nach Anspruch 1, weiter eine Haube (4) zum Abdecken des ersten Moduls (2) umfassend, wobei die Haube (4) reversible Befestigungsmittel (40) umfasst, die dafür ausgebildet sind, mit den Befestigungsmitteln (24) des Gehäuses (20) des ersten Moduls (2) zusammenzuwirken, wobei die Haube (4) die Verbindungsmittel (23) des ersten Moduls (2) abdeckt, sobald die Haube (4) auf dem ersten Modul (2) befestigt wird.

3. System (1) nach Anspruch 2, wobei die Haube (4) eine Batterie (41) enthält, die an elektrische Verbindungsmittel (42) angeschlossen ist, die dafür ausgebildet sind, eine elektrische Verbindung zu den Verbindungsmitteln (23) des ersten Moduls (2) herzustellen, sobald die Haube auf dem ersten Modul (2) befestigt wird.

4. System (1) nach einem der vorstehenden Ansprüche, wobei das erste Modul (2) Befestigungsmittel (24) aufweist, die an einem Abschnitt seines Gehäuses (20) ausgeformt sind, der nicht vollständig in Abdeckung seiner Antenne (22) geht, sodass das zweite Modul (3) die Antenne (22) nicht vollständig abdeckt, sobald das zweite Modul (3) auf dem ersten Modul (2) befestigt wird.

5. System (1) nach einem der vorstehenden Ansprüche, wobei das Gehäuse (20) des ersten Moduls (2) eine flache Form mit einer vorbestimmten Dicke aufweist, und das Gehäuse (30) des zweiten Moduls (3) eine Aussparung (37) zum Aufnehmen des ersten Moduls (2) aufweist, die eine der Dicke des Gehäuses (20) des ersten Moduls (2) entsprechende Tiefe besitzt, wobei die Befestigungsmittel (36) des zweiten Moduls (3) in der Aussparung (37) ausgeformt sind.

6. System (1) nach einem der vorstehenden Ansprüche, wobei die Befestigungsmittel (24, 36) Mittel zur Befestigung durch Einklicken sind.

7. System (1) nach einem der vorstehenden Ansprüche, wobei das erste Modul (2) eine elektrische Verbindung zwischen dem Speicher (21) und der Antenne (22) enthält, wobei die Verbindung mindestens zum Teil auf einer Außenfläche des Gehäuses (20) des ersten Moduls (2) ausgeführt ist und einen reißfähigen Teil aufweist, der mit Mitteln zum Festkleben auf dem Träger (S) versehen ist.

8. Verfahren zum Zusammenbauen eines Systems (1) gemäß einem der vorstehenden Ansprüche, umfassend eine Phase des Befestigens des ersten Moduls (2) auf einem Träger (S), insbesondere einem Gegenstand oder einer Person, gefolgt von einer Phase des Ankoppelns des zweiten Moduls (3) auf dem ersten Modul (2) mit:
- dem Befestigen der Gehäuse (20, 30) durch Zusammenwirken zwischen ihren jeweiligen Befestigungsmitteln (24, 36), und
- dem Verbinden zwischen dem Speicher (21) des ersten Moduls (2) und der Steuerung (31) des zweiten Moduls (3) durch Kontakt zwischen den elektrischen Verbindungsmitteln (23, 35).

9. Zusammenbauverfahren nach Anspruch 8, wobei im Anschluss an die Ankopplungsphase die Steuerung (31) automatisch ein Ankopplungssignal ausgibt.

10. Zusammenbauverfahren nach den Ansprüchen 8 oder 9, umfassend die folgenden Verknüpfungsphasen:
- eine erste Verknüpfungsphase zwischen der Befestigungsphase und der Ankopplungsphase, in der mit einem Schritt des Lesens der im Speicher (21) des ersten Moduls (2) gespeicherten Identifikationsinformation durch die externe Infrastruktur (IN) das erste Modul (2) in einer von einer externen Infrastruktur (IN) betriebenen Datenbank (BD) mit dem Träger (S) verknüpft wird;
- eine zweite Verknüpfungsphase nach der Ankopplungsphase, in der mit der Steuerung (31) des zweiten Moduls (3), die die im Speicher (21) des ersten Moduls (2) gespeicherte Identifikationsinformation abruft und die diese Identifikationsinformation an die externe Infrastruktur (IN) kommuniziert, das zweite Modul (3) in der gleichen Datenbank (BD) so mit dem Träger (S) verknüpft wird, dass das erste und zweite Modul (2, 3) in der Datenbank (BD) der gleichen Identifikationsinformation und dem gleichen Träger (S) zugeordnet sind.

11. Zusammenbauverfahren nach Anspruch 10, nacheinander umfassend:
- eine Phase des Abkoppelns des zweiten Moduls (3) vom ersten Modul (2), wobei mit der Trennung zwischen den Gehäusen (20, 30) und dem Trennen der Verbindung zwischen dem Speicher (21) des ersten Moduls (2) und der Steuerung (31) des zweiten Moduls (3) das erste Modul (2) auf dem Träger (S) befestigt bleibt,
- eine Phase des Entknüpfens, in der mit der Steuerung (31) des zweiten Moduls (3), die im Anschluss an das Trennen der Verbindung der Steuerung (31) zum Speicher (21) des ersten Moduls (2) automatisch eine Entknüpfungsinformation an die externe Infrastruktur (IN) kommuniziert, das zweite Modul (3) in der Datenbank (BD) vom Träger (S) entknüpft wird.

12. Zusammenbauverfahren nach einem der Ansprüche 8 bis 11, wobei vor der Ankopplungsphase auf den Träger (S) bezogene Daten im Speicher (21) des ersten Moduls (2) gespeichert werden, und anschließend nach der Ankopplungsphase die Steuerung (31) diese auf den Träger (S) bezogenen Daten über die elektrische Verbindung zwischen den zwei Modulen (2, 3) automatisch liest, für eine auf die Merkmale des Trägers (S) abgestimmte Überwachung des Trägers (S) durch das zweite Modul (3).

13. Zusammenbauverfahren nach einem der Ansprüche 8 bis 12, umfassend eine Phase des Entfernens des ersten Moduls (2) vom Träger (S), wobei das Entfernen das erste Modul (2) automatisch infunktional macht.

## Claims

1. A modular radio-identification system (1) of the type comprising:
- a first module (2) for passive radio-identification comprising a casing (20) inside which is disposed a memory (21) for storing an identification data linked to an antenna (22); and
said system (1) being **characterized in that** it further comprises:
- a second module (3) for active radio-identification comprising a casing (30) inside which is disposed a controller (31) linked to a supply battery (32), to a radio frequency transmitter/receiver (33) and to at least one sensor (34) for measuring a physical parameter;
wherein the casings (20, 30) of both modules (2, 3) are equipped with reversible and complementary fastening means (24, 36) adapted to cooperate together in order to enable the reversible fastening of the second module (3) on the first module (2);
and the modules (2, 3) comprise electrical connection means (23, 35) adapted to establish an electrical connection between the memory (21) of the first module (2) and the controller (31) of the second module (3) once the second module (3) is fastened on the first module (2).

2. The system (1) according to claim 1, further comprising a cowl (4) for covering the first module (2), said cowl (4) comprising reversible fastening means (40) adapted to cooperate with the fastening means (24) of the casing (20) of said first module (2), said cowl (4) covering the connection means (23) of the first module (2) once the cowl (4) is fastened on the first module (2).

3. The system (1) according to claim 2, wherein said cowl (4) integrates a battery (41) linked to electrical connection means (42) adapted to establish an electrical connection with the connection means (23) of the first module (2) once the cowl is fastened on the first module (2).

4. The system (1) according to any one of the preceding claims, wherein the first module (2) has fastening means (24) arranged on a portion of its casing (20) which does not completely cover its antenna (22), so that the second module (3) does not completely cover said antenna (22) once the second module (3) is fastened on the first module (2).

5. The system (1) according to any one of the preceding claims, wherein the casing (20) of the first module (2) has a flat shape with a predetermined thickness, and the casing (30) of the second module (3) has a notch (37) for receiving the first module (2) having a depth equivalent to the thickness of the casing (20) of the first module (2), where the fastening means (36) of the second module (3) are arranged in said notch (37).

6. The system (1) according to any one of the preceding claims, wherein the fastening means (24, 36) are snap-fastening means.

7. The system (1) according to any one of the preceding claims, wherein the first module (2) integrates an electrical connection between the memory (21) and the antenna (22), said connection being carried out at least partly on an external face of the casing (20) of the first module (2) and having a breakable part provided with adhesion means on the support (S).

8. A method for assembling a system (1) in accordance with any one of the preceding claims, comprising a fastening phase of the first module (2) on a support (S), particularly an object or a person, followed by a coupling phase of the second module (3) on the first module (2) with:
- the fastening of the casings (20, 30) by cooperation between their respective fastening means (24, 36), and
- the connection between the memory (21) of the first module (2) and the controller (31) of the second module (3) by contact between the electrical connection means (23, 35).

9. An assembly method according to claim 8, wherein, following the coupling phase, the controller (31) automatically transmits a coupling signal.

10. The assembly method according to claim 8 or 9, comprising the following attachment phases:
- a first attachment phase, between the fastening phase and the coupling phase, wherein the first module (2) is attached to the support (S) in a database (BD) operated by an outer infrastructure (IN), with a reading step by the outer infrastructure (IN) of the identification data stored in the memory (21) of the first module (2);
- a second attachment phase, after the coupling phase, wherein the second module (3) is attached to the support (S) in the same database (BD), with the controller (31) of the second module (3) retrieving the identification data stored in the memory (21) of the first module (2) and communicating this identification data to the outer infrastructure (IN), so that the first and the second modules (2, 3) are associated with the same identification data and to the same support (S) in the database (BD).

11. The assembly method according to claim 10, comprising successively:
- a decoupling phase of the second module (3) vis-à-vis the first module (2), the first module (2) remaining fastened on the support (S), with the separation between the casings (20, 30) and the disconnection between the memory (21) of the first module (2) and the controller (31) of the second module (3),
- a detachment phase wherein the second module (3) of the support (S) is detached in the database (BD), with the controller (31) of the second module (3) automatically communicating a detachment data to the outer infrastructure (IN) following the disconnection of said controller (31) with the memory (21) of the first module (2).

12. The assembly method according to any one of claims 8 to 11, wherein, before the coupling phase, data related to the support (S) are stored in the memory (21) of the first module (2), and then, after the coupling phase, the controller (31) automatically reads these data related to the support (S) via the electrical connection between the two modules (2, 3) for a supervision of the support (S) by the second module (3) adapted to the characteristics of said support (S).

13. The assembly method according to any one of claims 8 to 12, comprising a removal phase of the first module (2) vis-à-vis the support (S), said removal making said first module (2) automatically inoperative.
